# EUROPEAN PATENT SPECIFICATION

(11) **EP 2 168 068 B1**
(45) Date of publication and mention of the grant of the patent: **26.08.2015**
(21) Application number: 07748567.0
(22) Date of filing: 11.06.2007
(51) Int. Cl.: H04W 12/06, H04W 88/02, H04L 29/06, H04L 9/08, H04L 9/32, G06F 21/00, G06F 21/44

(54) **METHOD AND ARRANGEMENT FOR CERTIFICATE HANDLING**
VERFAHREN UND ANORDNUNG ZUM UMGANG MIT ZERTIFIKATEN
PROCÉDÉ ET AGENCEMENT POUR UNE MANIPULATION DE CERTIFICAT

(43) Date of publication of application: 31.03.2010
(73) Proprietor: Telefonaktiebolaget L M Ericsson (publ), 164 83 Stockholm (SE)
(72) Inventor: RUNE, Johan, S-18130 Lidingö (SE); VIKBERG, Jari, S-15138 Järna (SE); NYLANDER, Tomas, S-13934 Värmdö (SE)
(74) Representative: Ericsson
(86) International application number: PCT/SE2007/050407
(87) International publication number: WO 2008/153456

(56) References cited:
- EP-A2- 1 788 754
- WO-A1-2005/060150
- WO-A2-2007/012083
- KR-B1- 100 653 638
- US-A1- 2003 028 805
- US-A1- 2003 182 549
- US-A1- 2003 196 084
- US-A1- 2005 138 351
- US-A1- 2006 253 703
- US-A1- 2006 294 368

## Description

### Technical field

The present invention relates to a method and an arrangement for authentication and authorization in an access network. In particular, the present invention relates to certificate handling in such networks.

### Background

The need to authenticate the identity of a user accessing a network, and equivalently to authenticate a network entity to a user or client, is apparent in many existing and future communication systems. In particular, authentication issues arise in roaming scenarios wherein a user accesses a plurality of different networks and utilises a wide range of service provided by different operators and service providers. A widespread technology for secure communication between a user/client and a network entity is to establish a so called secure tunnel between the client and a security gateway (SEGW) of the access network.

One example of an established secure tunnel technology is known as IPsec (Internet Protocol security), which is utilised for a number of access methods in various communication systems [7], [8]. This secure connection is established using a key exchange procedure referred to as IKEv2 (Internet Key Exchange Version 2) [6] utilizing for example the extensible authentication protocol (EAP) based on subscriber identity module (EAP-SIM) [10] or authentication and key agreement (EAP-AKA) [11] as the user authentication method for the client. One example of a use of this access mechanism is the method of accessing a GSM network via an IP network, with the layer 2 connection to the terminal assumedly provided by WLAN or Bluetooth, which has been specified by the 3^{rd} Generation Partnership Project (3GPP) starting from Release-6 and is generally known as Generic Access Network (GAN) [12][13] (sometimes, or previously, referred to as Unlicensed Mobile Access, UMA). Another example is the Interworking WLAN [14][15][16] access method, as specified by the 3GPP. A third example is the Mobile IPv6 (MIPv6) access to a Home Agent (HA) via a non-3GPP access network in the anticipated 3GPP System Architecture Evolution (SAE) architecture. IKEv2 mandates that if EAP [9] based authentication is used for one party, then certificate based authentication must be used for the other party. For the concerned type of access this means that the SEGW is authenticated towards the terminal, i.e. the User Equipment (UE)/Mobile Station (MS), using certificates in IKEv2 (see e.g. [16] for I-WLAN). During the IKEv2 negotiation the SEGW provides its certificate to the UE. Note that this may actually be a certificate chain and not only a single certificate, but for simplicity this document will henceforth refer to this SEGW action as providing a certificate. The term "certificate chain" is defined in the Detailed Description. The UE is assumed to have a 'root' certificate from the same Certificate Authority (CA) that is at the top of the certificate chain for the SEGW certificate and which thus provides the ultimate guarantee of the certificate's validity. Using this root certificate, the UE can authenticate the certificate received from the SEGW and hence the SEGW.

In the case of roaming between operators a UE can be instructed from the Home Public Land Mobile Network (HPLMN) to contact and use a SEGW in the Visited PLMN (VPLMN). This roaming scenario is present in GAN and some scenarios for I-WLAN access and potentially in SAE. The UE needs to have the root certificate of the Certificate Authority (CA) that provides the top of the certificate chain leading to the certificate loaded in the SEGW. If an operator of a first PLMN signs a roaming agreement with an operator of another PLMN, all UE's of the first operator would need to be updated with the root certificate of the CA used in the other PLMN. Also an operator might need to change the CA it is using for any reason or might need to have multiple CAs. It is a huge task to update all UE's with root certificates, especially since this is a manual task because the terminals currently cannot be loaded with new certificates using 'Over The Air' (OTA) provisioning.

A further problem arises from the currently assumed situation, for example in the case of GAN, that each Mobile Equipment (ME), i.e. the UE excluding the Subscriber Identity Module (SIM) card/Universal Integrated Circuit Card (UICC), is loaded with a limited set, one or more, of root certificates at production time. This or these certificate(s) will thus be the one(s) that the ME manufacturer sees as appropriate. Since an ME may potentially be used by any user in any network the matching problem between the root certificate(s) in the ME and the root certificate required by a contacted SEGW may be present also in the non-roaming case, i.e. when the ME accesses a SEGW in the user's HPLMN.

Thus, the problem with the existing solutions can be described as a potential mismatch, or incompatibility, between the certificate(s) of the SEGW and the root certificate(s) of the UE, resulting in that the UE cannot verify the validity of the SEGW's certificate, which in turn means that the UE cannot authenticate the SEGW.

Patent application US 2003/0028805 discloses a system where a client presents a certificate to the system and the system redirects the client to the service corresponding to the certificate. If the client does not present a certificate valid for a service, it will instead be directed to an enrolment manager where it can sign up for a service and receive a certificate for that service.

Patent application US 2003/0182549 discloses a system wherein a client presents its certificate to a server. If the server does not have a corresponding root certificate, and thus cannot validate the certificate presented by the client, the server fetches such a root certificate from a certificate server.

Patent application US 2006/0253703 discloses a system wherein a client accesses a network via a gateway. An identity message is sent from the network of the gateway to an entity, e.g AAA server, in the home network of the client. The message contains information about the identity of the client and which network the gateway belongs to. The entity in the home network retrieves a root certificate for the Certification Authority used by the network of the gateway, signs it with its own keys, and transmits it to the gateway. The gateway transmits it to the client along with its own certificate. The client verifies the certificate of the gateway using the received root certificate.

### Summary

Obviously an improved method and arrangement for providing useable certificates to the authentication of security gateways towards accessing user equipment is needed.

The object of the present invention is to provide a method and arrangements that overcome the drawbacks of the prior art techniques. This is achieved by the method as defined in claim 1 and the gateway as defined in claim 5.

The method according to the invention provides an authentication procedure applicable when a user equipment accesses a visited or home network via a security gateway in a communication network. In an initial phase the user equipment and the security gateway exchange information on available certificate(s), either by providing the certificates themselves, or by providing indications specifying available certificates.

If the user equipment and the security gateway lack matching certificates, the attempted authentication of the security gateway can not take place according to existing protocols and arrangements. According to the invention, if a certificate mismatch is identified, a certificate server is engaged. The certificate server, which is a separate entity from the security gateway, assists in at least part of the authentication procedure. Once the authentication is confirmed a secure tunnel can be established between the user equipment and the security gateway and payload traffic can be transferred.

According to one embodiment of the invention the certificate server assists in part of the authentication by providing the security gateway or the user equipment with at least one certificate so that the security gateway and the user equipment have at least one matching certificate. The embodiment comprises the steps of:
- the user equipment provides the security gateway with an indication of its available root certificates,
- the security gateway compares the indication of available certificates from the user equipment with stored certificates,
- if the security gateway could not find a stored certificate matching the indicated certificates, the security gateway requests a matching certificate from the certificate server,
- the certificate server generates a matching certificate and associated key pair,
- the certificate server sends the certificate and its associated key pair to the security gateway,
- the security gateway sends the matching certificate to the user equipment and
- the user equipment validates the received certificate.

According to a further embodiment the certificate server assists in the authentication by performing part of the authentication of the security gateway on behalf of the user equipment. This embodiment may comprise the steps of:
- the security gateway sends at least one certificate to the user equipment,
- the user equipment compares the certificate received from the security gateway with stored root certificates,
- if the user equipment can not validate the certificate received from the security gateway using root certificates stored in the user equipment, the user equipment sends the received certificate to the certificate server,
- the certificate server validates the certificate originating from the security gateway,
- the certificate server sends an indication of the result of the validation to the user equipment.

As an alternative, instead of requesting the certificate server to validate the security gateway's certificate, the user equipment requests the certificate server to send the required root certificate, so that the user equipment itself can validate the security gateway's certificate. In its request for a root certificate, the user equipment includes either the security gateway's certificate or an indication of the required root certificate. Provided that the certificate server has access to the required root certificate, it returns it to the user equipment. The user equipment uses the acquired root certificate to validate the security gateway's certificate and may additionally and optionally store the root certificate for later use.

One embodiment of the invention leverages the trust/security relations between a certificate server and the security gateway and between the certificate server and the user equipment.

Thanks to the invention the problem of incompatibility/mismatch between the certificate of a security gateway and the root certificate(s) of an accessing user equipment is solved.

Embodiments of the invention provides solutions that can be confined entirely to the network and have no impact on the UE, which can be preferred in certain circumstance. Other embodiments avoid potential administrational issues, by leveraging the trust/security relations between the home AAA server (certificate server) and the security gateway and between the home AAA server and the user equipment.

The method according to the invention is generic enough to be applicable to any type of access using a dynamically established IPsec tunnel to a gateway (denoted SEGW) in a sought network as the access mechanism. Typical examples include GAN (formerly called UMA) and I-WLAN. An additional example where the solutions are applicable is the access to the MIPv6 Home Agent in the anticipated 3GPP SAE architecture.

Embodiments of the invention also eliminate the need for implementing and using the Online Certificate Status Protocol (OCSP) in the user equipment. According to the embodiments of the invention the OSCP can instead be implemented in the certificate server.

Embodiments of the invention are defined in the dependent claims. Other objects, advantages and novel features of the invention will become apparent from the following detailed description of the invention when considered in conjunction with the accompanying drawings and claims.

### Brief Description of the Drawings

The invention will now be described in detail with reference to the drawing figures, wherein
Fig. 1 schematically illustrates an accessing scenario wherein the method and arrangement according to the invention may be employed;
Fig. 2a-d are signalling schemes illustrating the establishment of a IPsec tunnel utilizing a) a full EAP-SIM authentication procedure, b) an EAP-SIM fast re-authentication procedure, c) a full EAP-AKA authentication procedure and d) an EAP-AKA fast re-authentication procedure;
Fig. 3 schematically illustrates an authentication method according to one embodiment of the invention;
Fig. 4a schematically illustrates an authentication method according to one embodiment of the invention, and 4b) a corresponding signalling scheme;
Fig. 5a schematically illustrates an authentication method according to one embodiment of the invention, and 5b-e corresponding signalling schemes, b) a full EAP-SIM authentication procedure, c) an EAP-SIM fast re-authentication procedure, d) a full EAP-AKA authentication procedure and e) an EAP-AKA fast re-authentication procedure;
Fig. 6a schematically illustrates an authentication method according to one embodiment of the invention, and 6b) a corresponding signalling scheme;
Fig. 7 is a signalling scheme illustrating one embodiment of the invention; and
Fig. 8a-c schematically illustrates a (a) certificate server, (b) a user equipment and (c) a security gateway according to the invention.

### Detailed Description

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

In the following the below definitions will be used:
*'AAA'* - Authentication, Authorization and Accounting refers to procedures and actions performed by the network to authenticate the identity of a user, to authorize the user to use services and resources of the network and to collect accounting data pertaining to the user's communication session to be used for charging and statistics. These procedures involve communication between the access network and the home network, specifically between a AAA client and a AAA server (possibly via a AAA proxy in a visited network). This communication uses a AAA protocol, e.g. RADIUS [1][2] or Diameter [3][4][5].
*Certificate*- The purpose of a certificate is to prove that a certain public key (out of a public-private key pair) has been issued to a certain party. The certificate typically includes the concerned public key, the identity of the owner, an expiration time, the identity of the issuer of the certificate and possibly other relevant properties. To certify that a certificate is valid the issuer of the public-private key pair, and thus of the certificate, digitally signs the certificate with its (i.e. the issuer's) private key.
If B receives a certificate from A during a communication session, B can verify the validity of the certificate, and thus of the concerned public key, using the public key of the certificate issuer, provided that B trusts the issuer, i.e. that the issuer is a trusted third party.
*Certificate chain-* Assume that A issues a public-private key-pair and associated certificate to B and signs the certificate with its private key. Having a public-private key pair, B can then issue another public-private key pair and certificate to C, which in turn may issue a public private key pair and certificate to D and so on. Each issuer of a certificate signs the certificate with its private key to certify its validity. This way the certificates are linked together in a hierarchical sequence of trust and validity assurance, where the validity of each certificate in the chain can be verified using the public key of its issuer, which public key is included in the certificate of next hierarchical level in the chain. The validity of this issuer's public key can then be verified using the public key in the certificate of the next hierarchical level and so on. To validate a certain certificate a party may thus follow the hierarchical chain, validating each certificate on the way, until the certificate of a trusted issuer is found and the verification sequence can end. Such a hierarchical chain of certificates is denoted a certificate chain.
*Root certificate-* The top of a certificate chain is denoted a root certificate. Since there is no hierarchically higher level that can certify the validity of the root certificate, the root certificate is either unsigned or signed with the private key of its owner (i.e. self-signed).

In order for a root certificates to be useful, a party using the root certificate must consider the owner's public key as known and must trust its owner. (In practice providing the root certificate in a "secure" way, e.g. pre-stored in a software application, is a way of making the public key known and the required trust is then an assumed condition for the "secure" provision.)

*Certificate Authority (CA)-* In order for a certificate chain to eventually lead to a successful validation, it must include a trusted third party. A trusted third party can also be seen as a prerequisite for using public-private key pairs and certificates in an environment with many-to-many relations. A trusted third party that issues certificates is called Certificate Authority (CA). The root certificate of a CA is typically at the top of a certificate chain. CA root certificates are thus typically unsigned or self-signed, but different CAs also have the possibility to cross-sign each other's root certificate (which should not be seen as adding hierarchical levels to certificate chains). The purpose of cross-signing is to increase the probability that a certain party can trust a certain root certificate, in case different parties trust different subsets of CAs.

*Transitive trust-* If A trusts B and B trusts C, transitive trust means that A automatically trusts C.

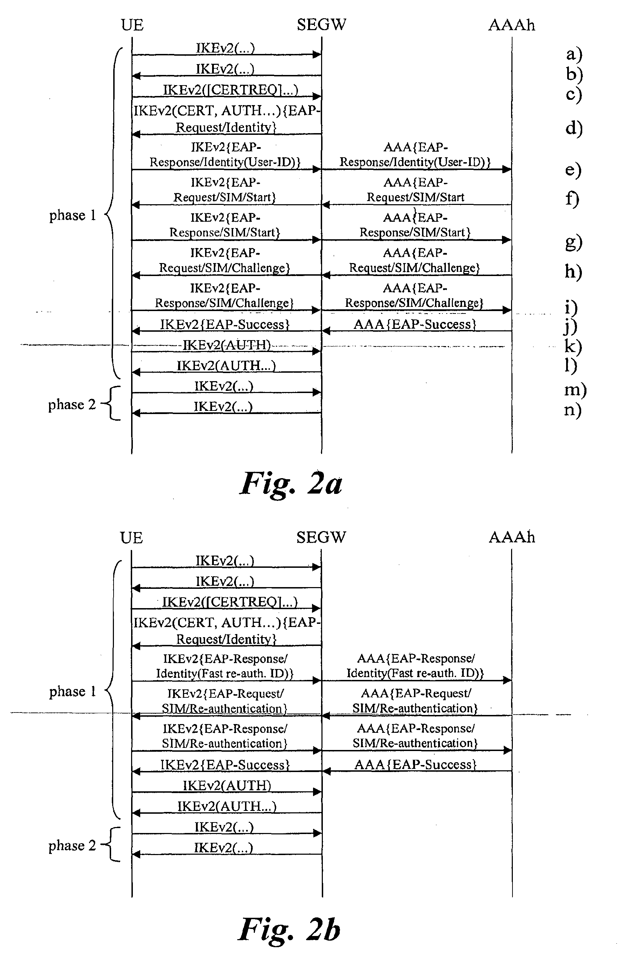

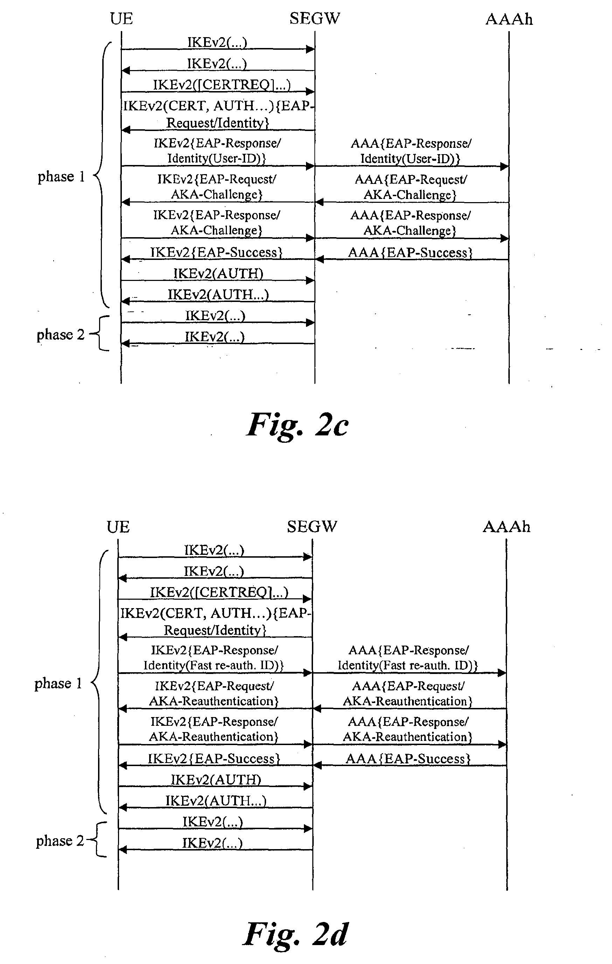

The following notations are used in the signaling diagrams in FIGs 2-7.
- ProtocolX(...){protocolY}: refers to a protocolY message encapsulated in a protocolX message, e.g. IKEv2{EAP} referring to an EAP packet that is encapsulated in an IKEv2 [6] message. The '(...)' notation indicates possible attributes/parameters/payloads of the protocolX message.
- ProtocolX(attributeZ...): refers to a message of protocolX containing attributeZ, e.g. IKEv2(CERTREQ...) referring to an IKEv2 message containing at least (indicated by the dots) the CERTREQ payload.
- ProtocolX([attributeR]...): refers to a message of protocolX that *may* contain the optional attributeR, e.g. IKEv2([CERTREQ]...) referring to an IKEv2 message optionally containing (at least) the CERTREQ payload.
- ProtocolX(attributeZ = z): refers to a message of protocolX with attributeZ indicating 'z', e.g. IKEv2(CERTREQ = VeriSign) referring to an IKEv2 message with the CERTREQ payload indicating the CA VeriSign.

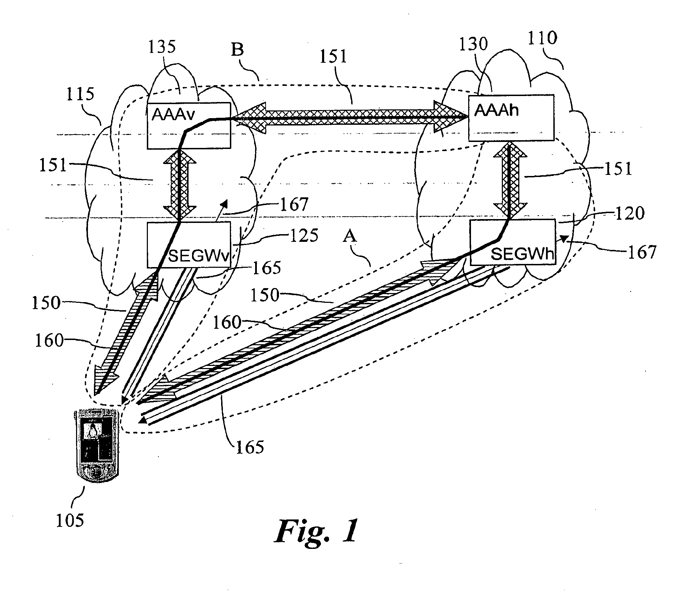

An access scenario wherein the method and arrangements according to the present invention are applicable is schematically illustrated in FIG. 1. A user equipment (UE) 105 is accessing either its home network 110 or a visited network 115. The access is via a security gateway (SEGW), in the home network, SEGWh 120 or via a security gateway in the visited network, SEGWv 125, corresponding to a non-roaming scenario A and a roaming scenario B, respectively. An AAA server, AAAh 130 in the home network 110 is utilized for the authentication, and in the case of aceessing a visited network 115, a visited AAA proxy in the visited network, AAAv 135, is also involved in addition to the AAAh 130. The authentication is performed, for example, with the use of IKEv2 signaling, AAA signaling and EAP signaling, in a process that will be further described below. The access procedure results, given a correct authentication, in a secure tunnel 165, an IPsec tunnel, between the UE and a SEGW, SEGWh 120 or SEGWv 125, which will carry the traffic.

A number of variants of access procedures are in use, schematically illustrated in the signaling diagrams of FIG. 2a-d.

FIG. 2a is a signaling diagram illustrating establishment of the IPsec tunnel used in the access mechanism, when a full EAP-SIM authentication procedure is used. 'AAA' refers to a AAA protocol, typically RADIUS or Diameter.

The IKEv2 procedure for IPsec tunnel establishment consists of two phases. The first phase establishes the IKE security associations (SAs) that are used to protect subsequent IKEv2 signaling. The second phase establishes the SAs for the actual IPsec tunnel. When EAP-based authentication is used the first phase is extended with messages carrying the EAP-based authentication procedure.

Messages a and b in FIG. 2a initiates the phase 1 exchange. This first pair of messages (IKE_SA_INIT) negotiate cryptographic algorithms, exchange nonces and do a Diffie-Hellman exchange to establish encryption keys for the IKE SAs. The second pair of messages, c and d, are normally used to authenticate the two peers as well as the preceding messages and this message exchange normally concludes the first phase. However, when EAP-based authentication is used the procedure is different. By excluding the AUTH payload from message c the UE indicates that it wishes to use EAP-based authentication. The UE may also optionally include a CERTREQ payload in this message to indicate which CAs it supports. In message d the SEGW transfers its certificate (which may be an entire certificate chain) to the UE. Messages e - j are extensions of the phase 1 procedure to convey the EAP-based authentication procedure, which in this case consists of the EAP messages for a full EAP-SIM authentication procedure. The SEGW does not authenticate the UE itself, but relays the EAP messages to and from the UEs home AAA server, the AAAh, by encapsulating the EAP messages in AAA messages on the SEGW-AAAh path. The AAAh performs the actual authentication of the UE and informs the SEGW of the outcome (successful in this example) in message j. After the EAP-SIM authentication procedure the UE and the SEGW exchanges two more IKEv2 messages in phase 1, messages k and 1, in order to authenticate all the preceding messages.

Phase 2 is also called a CREATE_CHILD_SA exchange. This phase consists of a single pair of messages, messages m and n, in which the UE and the SEGW, protected by the IKE SAs, exchange the information needed to establish the SAs for the IPsec tunnel.

In FIG. 1 the IKEv2 signaling 150 between the UE 105 and the SEGWh 120 or SEGWv 125 is illustrated with thick striped arrows, the AAA signaling 151 between the SEGWh 120 and AAAh 130 or SEGWv 125 and AAAv 135, respectively, is illustrated with thick checked arrows and the end-to-end EAP signaling 160 between the UE 105 and the AAAh 130 is illustrated with solid lines. In the roaming case the AAA signaling 151, and thus the encapsulated EAP signaling 160 goes via AAAv 135 in the visited network 115. The thin solid arrows illustrate the path of the traffic flow 167 after the IPsec tunnel 165 has been established.

The full EAP-SIM authentication procedure in FIG. 2a begins with an identity request in message d. The UE supplies the user identity in message e. Messages f and g are EAP-Request/SIM/Start and EAP-Response/SIM/Start messages. These two messages negotiate the EAP-SIM version to use and exchange data, including a nonce from the UE, that is used when deriving keying material for, among other things, protection of the subsequent messages. Thus the subsequent EAP-SIM messages may be protected by a message authentication code, the AT_MAC attribute. In message h the AAAh sends a challenge to the UE. The UE calculates a response to the challenge using the SIM-based GSM authentication algorithm and returns this response in message i. The AAAh verifies the response and, provided that the verification is successful, confirms the successful authentication in message j.

FIG. 2b is a signaling diagram illustrating establishment of the IPsec tunnel used in the access mechanism, when an EAP-SIM fast re-authentication procedure is used. This signaling diagram differs from the signaling diagram of FIG. 2a only in the message carrying the EAP SIM authentification procedure. Instead of a user identity the UE sends a fast re-authentication identity agreed with the AAAh during a previous full authentication procedure. The EAP-Request/SIM/Start and EAP-Response/SIM/Start messages are not needed in the fast re-authentication procedure. Instead there is only a challenge-response exchange in the EAP-Request/SIM/Re-authentication and EAP-Request/SIM/Re-authentication messages followed by a confirmation of the successful authentication in the EAP-Success messages from the AAAh.

FIG. 2c is a signaling diagram illustrating establishment of the IPsec tunnel used in the access mechanism, when a full EAP-AKA authentication procedure is used. In this signaling diagram the full EAP-SIM authentication procedure of FIG. 2a is replaced by a full EAP-AKA authentication procedure. Like the full EAP-SIM authentication procedure the full EAP-AKA authentication procedure begins with an identity request, which triggers the UE to send a user identity to the AAAh. The AAAh then initiates the actual AKA authentication procedure by sending a challenge and a network authentication token (for authentication of the network towards the UE) to the UE in an EAP-Request/AKA-Challenge message. The UE verifies the network authentication token and calculates a response to the challenge using the AKA algorithm and returns this response to the AAAh in an EAP-Response/AKA-Challenge message. The AAAh verifies the response and, provided that the verification is successful, confirms the successful authentication.

FIG. 2d is a signaling diagram illustrating establishment of the IPsec tunnel used in the access mechanism, when an EAP-AKA fast re-authentication procedure is used. This signaling diagram differs from the signaling diagram of FIG. 2c only in the messages carrying the EAP-AKA authentication procedure. Instead of a user identity the UE sends a fast re-authentication identity agreed with the AAAh during a previous full authentication procedure. This is followed by a challenge-response exchange in the EAP-Request/AKA-Reauthentication and EAP-Response/AKA-Reauthentication messages, which in turn are followed by a confirmation of the successful authentication from the AAAh.

The above described versions of authentication all rely on matching root certificates between the UE and the SEGW which the UE accesses. As described in the background section this is not always the case. The problem of providing matching root certificates is most pronounced in roaming scenarios, but can, as indicated, arise also in the accessing procedure in a home network.

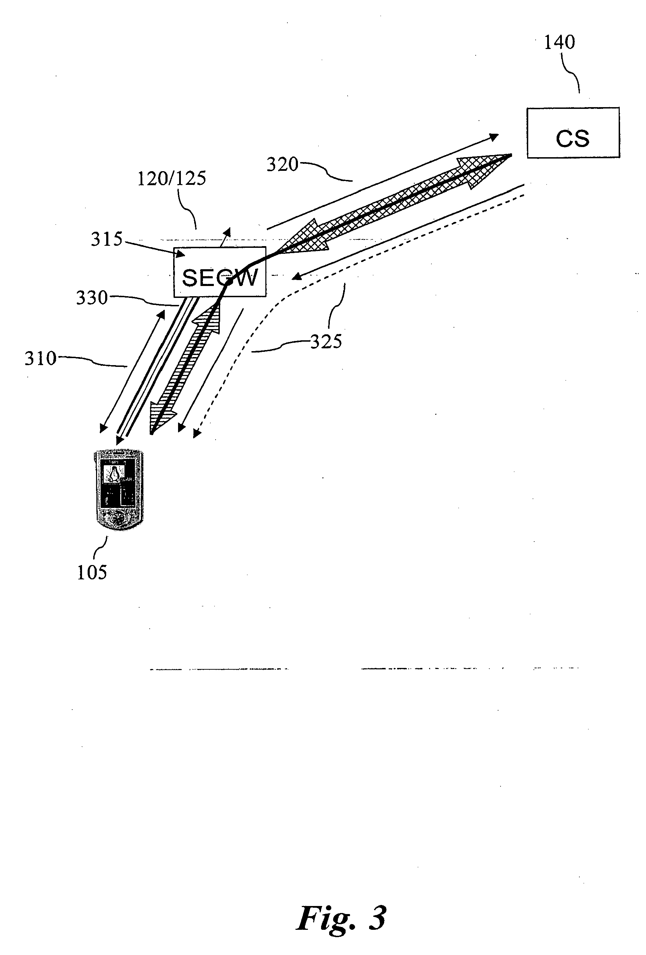

According to the method and arrangement of the invention, illustrated in FIG. 3, a certificate server (CS) is introduced and utilized in phase 1 of the authentication procedure. The certificate server 140 may belong to a visited network or to the UE's home network. The authentication procedure is initiated upon a UE 105 accessing a network, either a home or visited, via a SEGW 120/125 and comprises the main steps of:
310: The UE 105 and the SEGW 120/125 exchange information on available certificate(s).
315: Identification of a mismatch of certificates between the UE 105 and the SEGW 125, impeding the attempted authentication procedure.
320: A certificate server 140 is engaged. The selection of certificate server 140 may be based on a user identity provided by the UE 105.
325: The certificate server 140 is involved in at least part of the authentication procedure, either by providing the SEGW 120/125 (indicated with solid arrows) or the UE 105 (indicated with a dashed arrow) with a root certificate, or by performing the authentication of the SEGW itself, or part of the authentication of the SEGW, on behalf of the UE 105 and informing the SEGW 120/125 or the UE 105 of the result.
330: A secure tunnel is established between the UE 105 and the SEGW 120/125 and payload traffic can be transferred.

The term "certificate server" is meant to be a generic description of a central location, which can be used for authentication purposes. A certificate server may for example be an AAA server or a special purpose server.

As previously IKEv2 signalling is preferably used between the UE 105 and the SEGW 120, 125 and AAA signalling is preferably used between the SEGW and the certificate server 140.

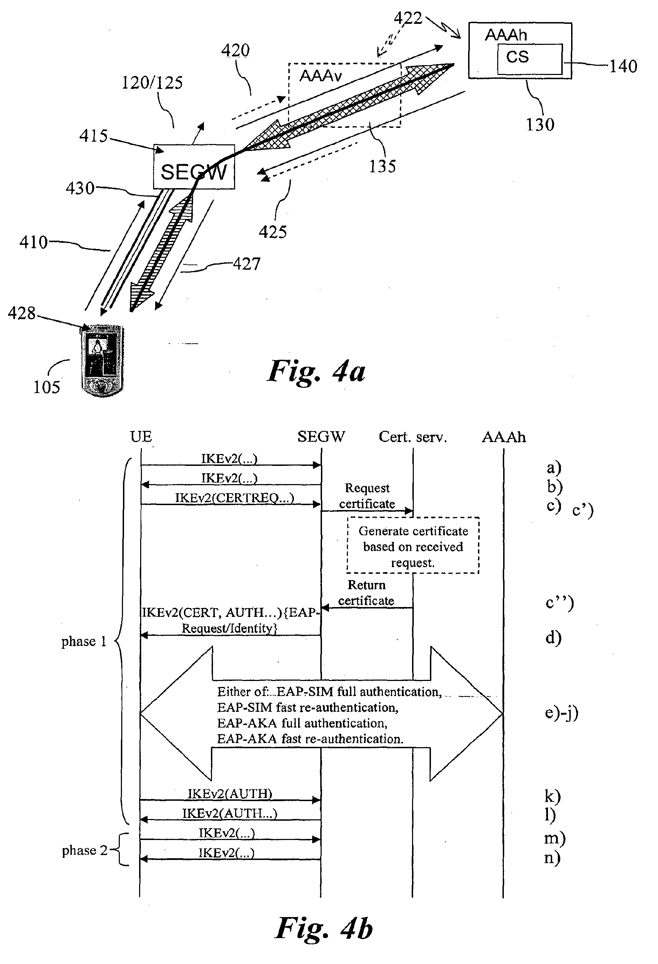

According to an embodiment of the invention the SEGW 120/125 is provided with a certificate that matches (one of) the UE's root certificate(s) from the certificate server. The embodiment is schematically illustrated in FIG. 4a and corresponding signalling in the signalling scheme of FIG. 4b. A UE 105 accessing a network 110/115 (Fig 1), either a home or visited, via a SEGW 120/125, and an authentication procedure is initiated. Preferably the access is a modification of the above described IKEv2 procedures. In this embodiment the certificate server is located in the network of the SEGW. If this network is also the home network of the UE (non-roaming case), the certificate server may be integrated in the AAAh 130, which is illustrated in FIG. 4a. If the SEGW's network is a visited network (roaming case), the certificate server may be integrated in the AAAv 135. In the signalling diagram of FIG. 4b it is illustrated as a separate entity which represents an alternative implementation. The embodiment comprises the steps of:
410: The UE 105 provides the SEGW 120/125 with an indication of its available root certificate(s). The indication is in the form of indications of CAs supported by the UE 105. The indication of CAs can be included in a CERTREQ parameter, in the third message in the IKVEv2 exchange, message c.
415: The SEGW 120/125 compares the CAs from the UE 105 with stored certificates.
420: If the SEGW 120/125 could not find a certificate matching the CAs, the SEGW 120/125 requests a matching certificate from the certificate server, AAAh 130 (solid arrow) or AAAv 135 (dashed arrow), in message c'. The certificate server has previously been provided by the operator with a large number of certificates, preferably corresponding to a large majority of CAs that potential UEs to be served may rely on, and stored them and their associated key pairs.
422: The certificate server, AAAh 130 or AAAv 135, generates such a matching certificate with associated key pair and signs the certificate with its own private key from the concerned CA. Alternatively, the certificate and key pair may also be generated in advance to improve the real-time performance.
425: The certificate server, AAAh 130 or AAAv 135, sends the certificate and its associated key pair to the SEGW 120/125, message c", indicated by a solid arrow and dashed arrow, respectively.
427: The SEGW 120/125 sends the matching certificate to the UE 105, message d.
428: The UE 105 validates the received certificate.
430: A secure tunnel is established between the UE 105 and the SEGW 120/125 and payload traffic can be transferred.

It should be noted that in the roaming case, the AAA/EAP signalling terminates in the AAAh 130, while the signalling for the request/return of the certificate terminates in the certificate server, for example the AAAv 135. The communication for request/return of certificates between the SEGW 120/125 and the AAAh or AAAv can follow a plurality of known protocols.

An alternative approach, which will be exemplified in the embodiments below, is to provide a means for the UE 105 to verify the validity of the SEGW's certificate. This approach leverages the trust/security relation between the UE and the certificate server 140, for example and preferably the AAAh 130, such that the AAAh 130 either validates the SEGW's certificate (on behalf of the UE 105) or provides the UE 105 with the root certificate that is needed for the validation. The validation can be communicated to the UE 105 either as a simple success indication (through EAP) or by associating the AAAh's digital signature with the SEGW's certificate. The AAAh 130 may validate the SEGW's certificate in the regular manner, using a root certificate, or by leveraging the existing trust/security relation between the AAAh 130 and the SEGW 120/125, possibly using transitive trust via a AAA proxy, AAAv 135, in a visited network.

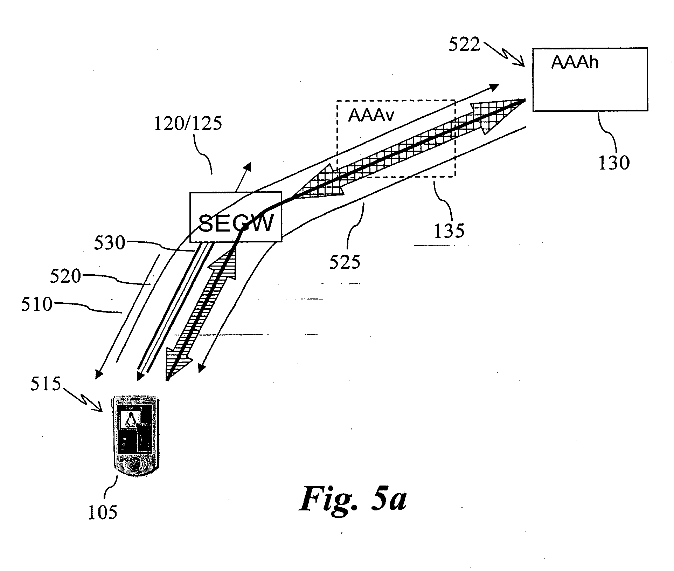

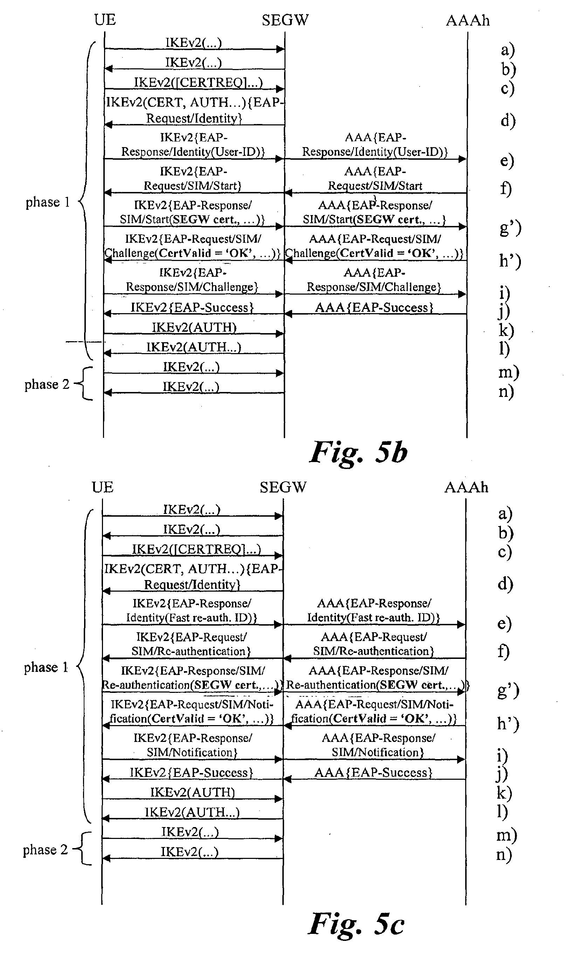

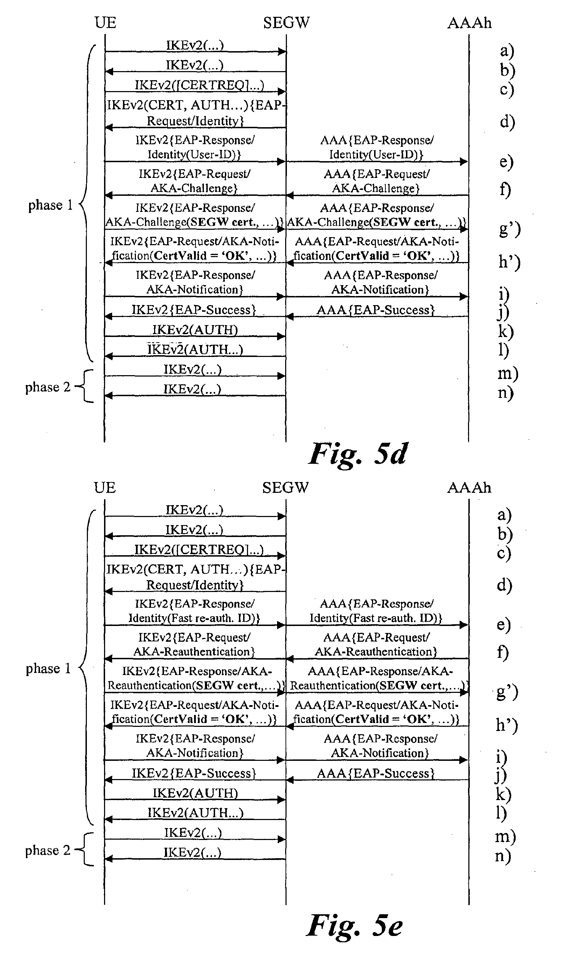

In one embodiment of the present invention, schematically illustrated in FIG. 5a and corresponding signalling in the signalling schemes of FIG. 5b-e, the home AAA server, AAAh 130 assists the UE 105 in validating the SEGW's certificate. A UE 105 accesses a network, either a home or visited, via a SEGW 120/125, and an authentication-procedure is initiated. Preferably the authentication procedure is a modification of the above described EAP procedures. Signalling scheme 5b illustrate the EAP-SIM full authentication procedure, 5c the EAP-SIM fast re-authentication procedure, 5d the EAP-AKA full authentication procedure and 5e the EAP-AKA fast re-authentication procedure. The embodiment comprises the steps of:
510: The SEGW 120/125 sends at least one certificate to the UE 105, message d.
515: The UE 105 compares the certificate received from the SEGW 120/125 with stored root certificates.
520: If the UE 105 cannot validate the SEGW's certificate using root certificate(s) stored in the UE, then the UE sends the SEGW's certificate to the AAAh 130 (certificate server) preferably during the EAP (i.e. EAP-SIM or EAP-AKA) authentication procedure. The SEGW's certificate is preferably included in a new EAP-SIM or EAP-AKA attribute, "SEGW cert", following the TLV (Type-Length-Value) format that is used for attribute extensions to EAP-SIM and EAP-AKA. The UE includes the attribute with the SEGW's certificate in the first EAP message that can be integrity protected by the AT_MAC attribute of EAP-SIM and EAP-AKA, message *g'*.
522: The AAAh 130 validates the SEGW's certificate. The AAAh 130 can use at least two different methods: a) use a root certificate to validate the certificate in a regular manner, provided that the AAAh has access to a root certificate from the concerned CA, b) to rely on the existing trust/security relation between the AAAh 130 and the SEGW 120/125. If the AAAh and the SEGW belong to the same network, the AAAh naturally trusts the SEGW to supply a valid certificate, whose integrity is guaranteed by the mandatory protection of the AAA signaling between the SEGW and the AAAh as well as by the AT_MAC attribute in the EAP signaling and can therefore assure the UE 105 that the SEGW's certificate is valid. If the AAAh 130 and the SEGW 120/125 belong to different networks, i.e. different operators or administrative domains, the AAAh 130 and the SEGW 120/125 or alternatively, an intermediate AAA proxy in the visited network, has a trust relation, based on a roaming agreement, and security associations that assure secure AAA communication. Therefore the AAAh can ensure the UE that the SEGW's certificate is valid also in a roaming scenario.
525: The AAAh 130 sends an 'OK' indication (or a 'not OK' indication in case of failed validation) to the UE 105, message h'. This indication is also preferably included in a new EAP-SIM or EAP-AKA attribute and must be protected by the AT_MAC attribute. If the message in which the AAAh received the SEGW's certificate was the last (specific) EAP-SIM or EAP-AKA message in the authentication procedure, then the (method-generic) EAP-Success message is the only remaining EAP message of the authentication procedure. Since the EAP-Success message cannot carry a method-specific attribute, such as the new attribute for the 'OK' (or 'not OK') indication, the AAAh uses an additional EAP-Request/SIM/Notification message (in case of EAP-SIM) or EAP-Request/AKA-Notification message (in case of EAP-AKA) to transfer the indication to the UE. In such case the UE responds with an EAP-Response/SIM/Notification message or an EAP-Response/AKA-Notification message and then the AAAh sends the EAP-Success message concluding the EAP authentication procedure. When an EAP-Request/SIM/Notification message or EAP-Request/AKA-Notification message is used to transfer the indication, then new notification codes (i.e. new values of an existing message field) may also be used instead of a new attribute.
530: A secure tunnel is established between the UE 105 and the SEGW 120/125 and payload traffic can be transferred.

When the certificate validation is based on the trust/security relation, the AAAh 130 does not have to have any root certificates. The security relation between the SIM-card (or UICC) in the UE 105 and the AAAh 130 (or more precisely the Authentication Center, AuC, that serves the AAAh with authentication parameters), which always exists, is the only required prerequisite.

In a GAN case the UE 105 may check that the SubjectAltName data in the SEGW's certificate complies with the requirement stated in the GAN standard specifications [13] before sending the certificate to the AAAh and choose to send it only if the requirement is fulfilled. The requirement is that the SubjectAltName data in the certificate provided by the SEGW not only matches the IDr payload received from the SEGW, but that it also contains an item that matches the SEGW identity that the UE has previously obtained from provisioning (e.g. configuration), discovery (in a GA-RC DISCOVERY ACCEPT message) or register redirect (in a GA-RC REGISTER REDIRECT message). This SEGW identity may be an IPv4 address, an IPv6 address or an FQDN.

As an alternative embodiment, instead of requesting the AAAh 130 to validate the SEGW's certificate, the UE 105 requests the AAAh 130 to send the required root certificate, so that the UE 105 itself can validate the SEGW's certificate. In its request for a root certificate, the UE 105 includes either the SEGW's certificate or an indication of the required root certificate. Provided that the AAAh 130 has access to the required root certificate, it returns it to the UE 105. The UE 105 uses the acquired root certificate to validate the SEGW's certificate and may additionally and optionally store the root certificate for later use.

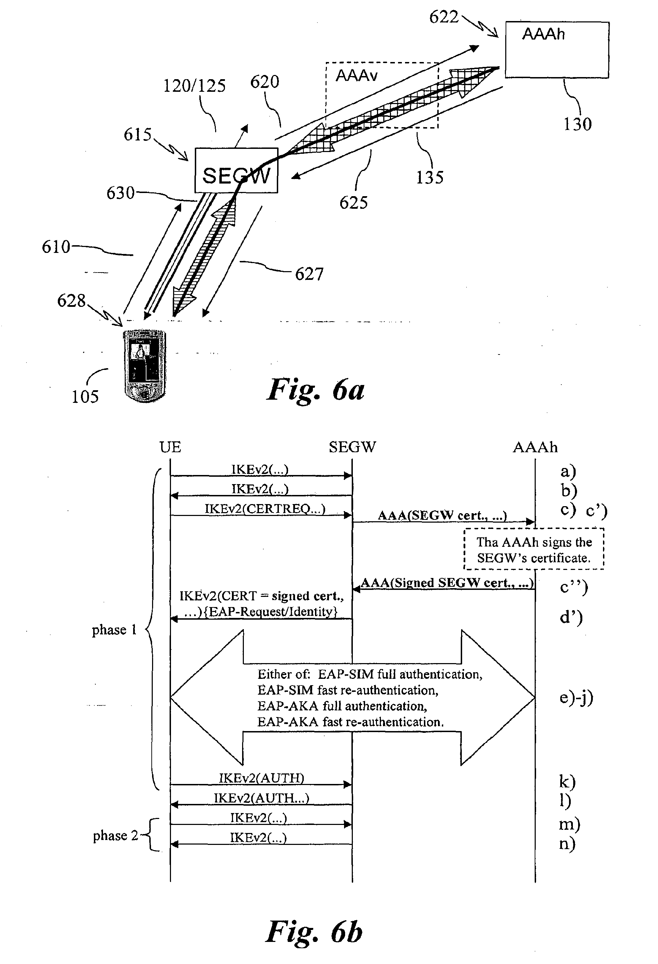

In a further embodiment of the present invention, schematically illustrated in FIG. 6a and corresponding signalling in the signalling scheme of FIG. 6b, the interaction between the SEGW 120/125 and the AAAh 130 is modified. The AAAh's ability to sign the SEGW's certificate is utilized in order to ensure its validity to the UE 105. A UE 105 accesses a network 110/115 (Fig 1), either a home or visited, via a SEGW 120/125, and an authentication procedure is initiated. Preferably the access is a modification of the above described IKEv2 and AAA procedures. The embodiment comprises the steps of:
610: The UE 105 provides the SEGW 120/125 with an indication of its available root certificate(s). The indication is in the form of indications of CAs supported by the UE 105.
615: The SEGW 120/125 compares the CAs from the UE 105 with stored certificates.
620: If the SEGW 120/125 could not find a certificate matching the CAs provided by the UE 105, the SEGW 120/125 sends (one of) its certificate(s) to the AAAh 130 and requests the AAAh 130 to sign it.
622: The AAAh 130 signs the certificate provided by the SEGW 120/125, either after a regular certificate validation using a root certificate or leveraging the existing trust/ security relation and secure communication between the AAAh 130 and the SEGW 120/125 (or AAA proxy 135).
625: The AAAh 130 returns the signed certificate to the SEGW 120/125.
627: The SEGW 120/125 subsequently sends the certificate to the UE 105 and includes the AAAh's signature.
628: The UE 105 validates the AAAh's signature and accepts that as a validation of the SEGW's certificate.
630: A secure tunnel is established between the UE 105 and the SEGW 120/125 and payload traffic can be transferred.

It would be possible for the AAAh 130 to sign the SEGW's certificate in step 622 with its private key, but it is preferred to sign the certificate with a key that the UE 105 and the AAAh 130 have previously shared, e.g. the most recently generated Master Session Key MSK or Extended Master Session Key EMSK (which are used in the EAP-SIM and EAP-AKA authentication procedures) or a key derived from these keys. If the AAAh 130 is uncertain whether the UE 105 has the latest MSK/EMSK in store, it may send two signatures - one produced with its private key and one produced with the latest MSK/EMSK, or a key derived therefrom.

The SEGW-AAAh communication preferably utilizes a AAA protocol (i.e. RADIUS or Diameter), using new message types and/or new attributes as illustrated in FIG. 6b. The SEGW (and AAA proxy if any) reaches the AAAh through AAA routing, message c' - "AAA(SEGW cert.,...)", using information contained in the user ID that the SEGW received from the UE in the same IKEv2 message as the CERTREQ payload message c - "IKEv2(CERTREQ...)". This information eventually has to take the shape of a *realm,* e.g. "the-worlds-best-operator.com", referring to the domain of the home operator. The information received from the UE may be in the form of a NAI, e.g. <user-name>@the-worlds-best-operator.com, or some other format that includes the user's International Mobile Subscriber Identity (IMSI) or at least the Mobile Country Code (MCC) and Mobile Network Code (MNC) that are normally contained in the IMSI. Using the MCC and the MNC either the UE or the SEGW can create a default realm containing the MCC and the MNC, e.g. similar to (or identical with) the realm format used in conjunction with interworking between WLAN and 3GPP networks (I-WLAN), i.e. "wlan.mnc<MNC>.mcc<MCC>.3gppnetwork.org". The AAAh 130 returns the signed certificate through similar means, message c" - - "AAA(signed SEGW cert.,...)". The SEGW 120/125 forwards the signed certificate (and signature) in a modified IKEv2 message, message d' - IKEv2(CERT=signed cert., ...){EAP-request/Identity}.

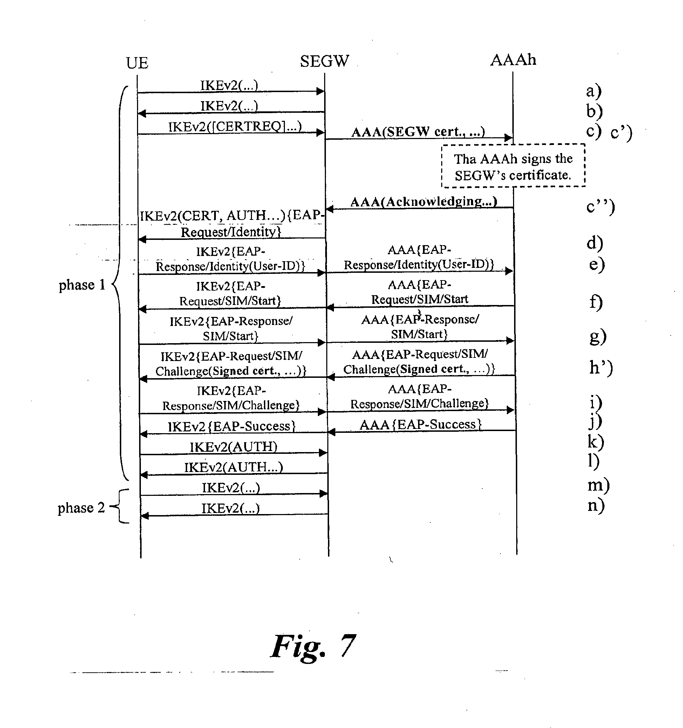

As an alternative embodiment, illustrated in signaling diagram of FIG. 7, the SEGW 120/125 sends (if needed) its certificate to the AAAh 130 for signing, as in step 620. The AAAh 130 signs the certificate, as in step 622. Instead of returning the signed certificate to the SEGW 120/125 in a dedicated new message, the AAAh 130 sends it to the UE in one of the EAP-SIM or EAP-AKA messages, for example modified messages h'- "AAA{EAP-Request/SIM/Challenge(signed cert., ...)" and "IKEv2{EAP-Request/SIM/Challenge(signed cert., ...)" respectively. Similar modification can be made in the other previously described EAP-SIM/EAP-AKA procedures.

Although the present invention has been described in general terms above a 3GPP GAN system has been the implicit main focus. Therefore it should be noticed that the invention is applicable also to a plurality of other communication systems, for example a 3GPP I-WLAN systems.

An I-WLAN UE establishes an IPsec tunnel to a PDG or TTG in a PLMN. Normally this PDG/TTG is located in the home PLMN, but it may optionally be located in a visited PLMN. In the former case the problem that the invention solves is present only if the lack of coordination between PDG/TTG certificates and root certificates in the UE is the same in I-WLAN systems as in the case of GAN. In the latter case, when IPsec tunnel is established to a PDG/TTG in a visited PLMN (i.e. the PLMN of a roaming partner of the operator of the home PLMN), the problem is applicable in any case.

The solution is the same in an I-WLAN system as described above with the SEGW being a PDG or a TTG.

The 3GPP SAE architecture is an interesting area and the invention is advantageously implemented in this scenario. In an anticipated SAE architecture a UE accessing the network via a non-3GPP access network (or possibly I-WLAN) uses IKEv2 towards a MIPv6 HA, with EAP-AKA as an integrated authentication mechanism, in order to establish IPsec SAs for protection of the MIPv6 signaling, and possibly for protection of the UE-HA tunnel. Typically the HA is located in the home PLMN, in which case the problem that the invention solves is present only if the lack of coordination between HA certificates and root certificates in the UE is the same as in the case of GAN. However, the UE may potentially also be allocated a HA, or an Inter Access System Anchor (IASA), in a visited PLMN, in which case the problem is applicable anyway.

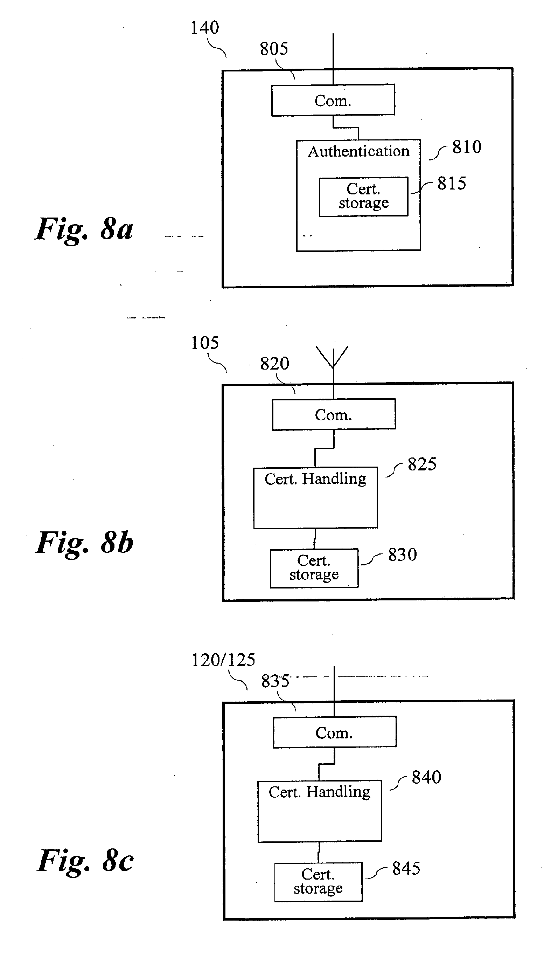

A certificate server 140, a user equipment 105, and a security gateway 120/125 according to embodiments of the present invention are schematically illustrated in FIGs. 8a-c. The certificate server 140, the user equipment 105, and the security gateway 120/125, are provided with respective means for carrying out respective parts of the method described above. The modules and blocks according to the present invention are to be regarded as functional parts of the nodes and not necessarily as physical objects by themselves. The modules and blocks are preferably at least partly implemented as software code means, to be adapted to effectuate the method according to the invention. The term "comprising" does primarily refer to a logical structure and the term "connected" should here be interpreted as links between functional parts and not necessarily physical connections. However, depending on the chosen implementation, certain modules may be realized as physically distinctive objects in a receiving or sending device.

The certificate server 140 comprises a communication module 805 adapted for communication with other entities in a communication network. The communication module 805 is typically and preferably adapted to handle a plurality of different protocols. The certificate server 140 is adapted to via the communication module 805 communicate with a SEGW. According to the invention the certificate server 140 comprises an authentication module 810 adapted to perform or assist in at least part of an authentication procedure in which a SEGW is authenticated towards a UE accessing the SEGW, the authentication procedure involving the SEGW and the UE accessing the SEGW. The certificate server may be integrated in an AAA server or an AAA proxy.

According to one embodiment authentication module 810 comprises or is in connection with a certificate storage module 815 and the certificate server 140 is adapted to provide the SEGW or the UE with a root certificate retrieved from the certificate storage module 815.

According to another embodiment the authentication module 810 is adapted to perform at least or part of the authentication of the SEGW, and to produce an indication of the result, which is transferred to the SEGW or the UE by the communication module 805.

The user equipment (UE) 105 comprises a radio communication module 820 adapted for communication with other entities in a communication network. The radio communication module 820 is typically and preferably adapted to handle a plurality of technologies for radio communication. The UE 105 is adapted to via the communication module 820 and via a plurality of common communication nodes (not shown) communicate with a SEGW. According to one embodiment of the invention the UE 105 comprises a certificate handling module 825 in connection with a certificate storing module 830. The certificate handling module 825 is adapted to identify if no matching certificate is stored in the certificate storing module 830 during an attempted authentication of a SEGW, and if no matching certificate is stored, request a certificate server, CS, to be engaged in the authentication. The certificate handling module 825 is further adapted to receive a certificate from the CS and to use this certificate in the authentication of the SEGW. Alternatively the certificate handling module 825 is adapted to receive an indication that the SEGW has been validated by another node in communication with the UE 105.

The security gateway (SEGW) 120/125 comprises a communication module 835 adapted for communication with other entities in a communication network. The communication module 835 is typically and preferably adapted to handle a plurality of different protocols. The SEGW 120/125 is adapted to via the communication module 835 communicate with a certificate server. According to embodiments of the invention the SEGW 120/125 comprises a certificate handling module 840 in connection with a certificate storing module 845. The certificate handling module 840 is adapted to, in an authentication procedure with a UE, compare provided indication(s) of certificate(s), with previously stored certificates, and if no matching certificate is identified, engage a further communication node, a certificate server, in the authentication procedure. In one embodiment the certificate handling module 840 is further adapted to request the engaged certificate server to provide a matching certificate and further adapted to receive the matching certificate and use it in an authentication procedure with a UE. In an alternative embodiment the certificate handling module 840 is further adapted to send a certificate to the engaged certificate server and request the certificate server to sign the certificate and further adapted to receive the signed certificate and use it in an authentication procedure with a UE.

The method according to the present invention may be implemented, at least in parts, by means of program products or program module products comprising the software code means for performing the steps of the method. The program products are preferably executed on a plurality of entities within a network. The program is distributed and loaded from a computer usable medium, such as a USB-memory, a CD, or transmitted over the air, or downloaded from Internet, for example.

While the invention has been described in connection with what is presently considered to be the most practical and preferred embodiments, it is to be understood that the invention is not to be limited to the disclosed embodiments, on the contrary, it is intended to cover various modifications and equivalent arrangements within the appended claims.

### References:

[1] C. Rigney et al., "Remote Authentication Dial In User Service (RADIUS)", RFC 2865, June 2000
[2] C. Rigney et al., "RADIUS Extensions", RFC 2869, June 2000
[3] Pat Calhoun et al., "Diameter Base Protocol", RFC 3588, September 2003
[4] P. Eronen et al., "Diameter Extensible Authentication Protocol (EAP) Application, Internet-Draft draft-ietf-aaa-eap-10.txt, November 2004
[5] Pat Calhoun et al., "Diameter Network Access Server Application", Internet-Draft draft-ietf-aaa-diameter-nasreq-17.txt, July 2004
[6] C. Kaufman, "Internet Key Exchange (IKEv2) Protocol", RFC 4306, December 2005
[7] S. Kent, R. Atkinson, "Security Architecture for the Internet Protocol", RFC 2401, November 1998
[8] S. Kent, K. Seo, "Security Architecture for the Internet Protocol", RFC 4301, December 2005
[9] B. Aboba et al., "Extensible Authentication Protocol (EAP)", RFC 3748, June 2004
[10] H. Haverinen, J. Salowey, "Extensible Authentication Protocol Method for Global System for Mobile Communications (GSM) Subscriber Identity Modules (EAP-SIM)", RFC 4186, January 2006
[11] J. Arkko, H. Haverinen, "Extensible Authentication Protocol Method for 3rd Generation Authentication and Key Agreement (EAP-AKA), RFC 4187, January 2006
[12] 3GPP TS 43.318 v6.9.0, "3rd Generation Partnership Project; Technical Specification Group GSM/EDGE Radio Access Network; Generic access to the A/Gb interface; Stage 2 (Release 6)
[13] 3GPP TS 44.318 v6.8.0, "3rd Generation Partnership Project; Technical Specification Group GSM/EDGE Radio Access Network; Generic Access (GA) to the A/Gb interface; Mobile GA interface layer 3 specification (Release 6)
[14] 3GPP TS 23.234 v6.10.0, "3rd Generation Partnership Project; Technical Specification Group Services and System Aspects; 3GPP system to Wireless Local Area Network (WLAN) interworking; System description (Release 6)
[15] 3GPP TS 24.234 v7.5.0, "3rd Generation Partnership Project; Technical Specification Group Core Network and Terminals; 3GPP system to Wireless Local Area Network (WLAN) interworking; User Equipment (UE) to network protocols; Stage 3 (Release 7)
[16] 3GPP TS 33.234 v7.4.0, "3rd Generation Partnership Project; Technical Specification Group Services and System Aspects; 3G Security; Wireless Local Area Network (WLAN) interworking security (Release 7)

## Claims

1. A method for an authentication procedure in accessing an access network, wherein a user equipment (105) accesses a visited or home network (110/ 115) via a security gateway (120/125), the method comprising the steps of:
- (310) the user equipment (105) and the security gateway (120/125) *exchanging* information on available certificate(s);
- (315) *identifying* a mismatch of certificates between the user equipment (105) and the security gateway (120/125), the mismatch impeding the attempted authentication of the security gateway (120/125); and
- (320) *engaging* a certificate server (140), the certificate server (140) assisting in at least part of the authentication procedure, wherein the certificate server (140) assists in part of the authentication by providing at least one certificate so that the security gateway (120/125) and the user equipment (105) have at least one matching certificate; the method **characterised by** the steps of:
- (410) the user equipment (105) *providing* the security gateway (120/125) with an indication of its available root certificate or certificates;
- (415) the security gateway (120/125) *comparing* the indication of available root certificate or certificates from the user equipment (105) with stored certificates;
- (420) if the security gateway (120/125) could not find a stored certificate matching the indicated root certificate or certificates, the security gateway (120/125) *requesting* a matching certificate from the certificate server (140);
- (422) the certificate server (140) *generating* a matching certificate and associated key pair;
- (425) the certificate server (140) *sending* the matching certificate and its associated key pair to the security gateway (120/125);
- (427) the security gateway (120/125) *sending* the matching certificate to the user equipment (105); and
- (428) the user equipment (105) *validating* the received certificate.

2. The method according to claim 1, wherein the certificate server is a AAA server in the home network of the user equipment (105).

3. The method according to claim 1, wherein the certificate of the security gateway (120/125) is sent to the certificate server (140) during an EAP authentication procedure, and wherein the certificate is comprised in a message attribute.

4. The method according to claim 1, wherein an indication of the result of the validation is sent to the user equipment during an EAP authentication procedure, and wherein the indication is comprised in a message attribute.

5. A security gateway (120/125) adapted to be in communication with a user equipment (105) and a certificate server (140) in a communication network, the security gateway (120/125) comprising a communication module (835) and a certificate handling module (840) in connection with a certificate storing module (845), the certificate handling module (840) adapted to, in an authentication procedure with the user equipment (105), exchange information on available certificates with the user equipment, and to be provided with at least one certificate so that the security gateway and the user equipment have at least one matching certificate, **characterized in that** the certificate handling module further is adapted to be provided with an indication of available root certificate or certificates in the user equipment, and to compare said provided indication of root certificate or certificates with at least one previously stored certificate, and if no matching certificate is identified, engage the certificate server (140) in the authentication procedure, and **in that** the certificate handling module (840) is adapted to request the certificate server (140) to provide a matching certificate, to receive from the certificate server the matching certificate and an associated key pair of the certificate server, to send the matching certificate to the user certificate and to use it in the authentication procedure with the user equipment (105).

## Patentansprüche

1. Verfahren für eine Authentifizierungsprozedur beim Zugang zu einem Zugangsnetz, wobei eine Benutzereinrichtung (105) über ein Sicherheits-Gateway (120/125) Zugang zu einem Besucher- oder Heimatnetz (110/115) erhält, wobei das Verfahren die folgenden Schritte umfasst:
- (310) dass die Benutzereinrichtung (105) und das Sicherheits-Gateway (120/125) Informationen über ein verfügbares Zertifikat oder verfügbare Zertifikate austauschen;
- (315) Identifizieren einer Nichtübereinstimmung von Zertifikaten zwischen der Benutzereinrichtung (105) und dem Sicherheits-Gateway (120/125), wobei die Nichtübereinstimmung die versuchte Authentifizierung des Sicherheits-Gateways (120/125) verhindert;
- (320) Beteiligen eines Zertifikatsservers (140), wobei der Zertifikatsserver (140) wenigstens bei einem Teil der Authentifizierungsprozedur hilft, wobei der Zertifikatsserver (140) bei einem Teil der Authentifizierung durch Bereitstellen mindestens eines Zertifikats hilft, so dass das Sicherheits-Gateway (120/125) und die Benutzereinrichtung (105) wenigstens ein übereinstimmendes Zertifikat aufweisen; wobei das Verfahren durch die folgenden Schritte gekennzeichnet ist, dass:
- (410) die Benutzereinrichtung (105) das Sicherheits-Gateway (120/ 125) mit einer Anzeige ihres verfügbaren Stammzertifikats oder ihrer verfügbaren Stammzertifikate versieht;
- (415) das Sicherheits-Gateway (120/125) die Anzeige des verfügbaren Stammzertifikats oder der verfügbaren Stammzertifikate von der Benutzereinrichtung (105) mit gespeicherten Zertifikaten vergleicht;
- (420) das Sicherheits-Gateway (120/125), wenn das Sicherheits-Gateway (120/125) kein gespeichertes Zertifikat finden konnte, das mit dem oder den angezeigten Stammzertifikaten übereinstimmt, ein übereinstimmendes Zertifikat vom Zertifikatsserver (140) anfordert;
- (422) der Zertifikatsserver (140) ein übereinstimmendes Zertifikat und ein assoziiertes Schlüsselpaar generiert;
- (425) der Zertifikatsserver (140) das übereinstimmende Zertifikat und sein assoziiertes Schlüsselpaar an das Sicherheits-Gateway (120/125) sendet;
- (427) das Sicherheits-Gateway (120/125) das übereinstimmende Zertifikat an die Benutzereinrichtung (105) sendet; und
- (428) die Benutzereinrichtung (105) das empfangene Zertifikat validiert.

2. Verfahren nach Anspruch 1, wobei der Zertifikatsserver ein AAA-Server im Heimatnetz der Benutzereinrichtung (105) ist.

3. Verfahren nach Anspruch 1, wobei das Zertifikat des Sicherheits-Gateways (120/125) während einer EAP-Authentifizierungsprozedur an den Zertifikatsserver (140) gesendet wird, und wobei das Zertifikat in einem Nachrichtenattribut enthalten ist.

4. Verfahren nach Anspruch 1, wobei eine Anzeige des Ergebnisses der Validierung während einer EAP-Authentifizierungsprozedur an die Benutzereinrichtung gesendet wird, und wobei die Anzeige in einem Nachrichtenattribut enthalten ist.

5. Sicherheits-Gateway (120/125), das so ausgelegt ist, dass es mit einer Benutzereinrichtung (105) und einem Zertifikatsserver (140) in einem Kommunikationsnetz in Kommunikation ist, wobei das Sicherheits-Gateway (120/125) ein Kommunikationsmodul (835) und ein Zertifikatsbearbeitungsmodul (840) in Verbindung mit einem Zertifikatsspeichermodul (845) umfasst, das Zertifikatsbearbeitungsmodul (840) so ausgelegt ist, dass es in einer Authentifizierungsprozedur mit der Benutzereinrichtung (105) Informationen über verfügbare Zertifikate mit der Benutzereinrichtung austauscht, und mit mindestens einem Zertifikat versehen wird, so dass das Sicherheits-Gateway und die Benutzereinrichtung wenigstens ein übereinstimmendes Zertifikat aufweisen, **dadurch gekennzeichnet, dass** das Zertifikatsbearbeitungsmodul ferner so ausgelegt ist, dass es mit einer Anzeige eines verfügbaren Stammzertifikats oder von verfügbaren Stammzertifikaten in der Benutzereinrichtung versehen wird, und die bereitgestellte Anzeige des oder der verfügbaren Stammzertifikate mit mindestens einem früher gespeicherten Zertifikat vergleicht und, wenn kein übereinstimmendes Zertifikat identifiziert wird, den Zertifikatsserver (140) an der Authentifizierungsprozedur beteiligt, und dadurch, dass das Zertifikatsbearbeitungsmodul (840) so ausgelegt ist, dass es den Zertifikatsserver (140) auffordert, ein übereinstimmendes Zertifikat bereitzustellen, das übereinstimmende Zertifikat und ein assoziiertes Schlüsselpaar des Zertifikatsservers vom Zertifikatsserver empfängt, das übereinstimmende Zertifikat an das Benutzerzertifikat sendet und es in der Authentifizierungsprozedur mit der Benutzereinrichtung (105) verwendet.

## Revendications

1. Procédé pour une procédure d'authentification lors de l'accès à un réseau d'accès, dans lequel un équipement utilisateur (105) accède à un réseau visité ou de rattachement (110/115) par l'intermédiaire d'une passerelle de sécurité (120/125), le procédé comprenant les étapes suivantes :
- (310) le fait que l'équipement utilisateur (105) et la passerelle de sécurité (120/125) échangent des informations sur un ou plusieurs certificats disponibles ;
- (315) l'identification d'une non-concordance de certificats entre l'équipement utilisateur (105) et la passerelle de sécurité (120/125), la non-concordance empêchant l'authentification tentée de la passerelle de sécurité (120/125) ; et
- (320) l'engagement d'un serveur de certificats (140), le serveur de certificats (140) aidant dans au moins une partie de la procédure d'authentification, dans lequel le serveur de certificats (140) aide dans une partie de l'authentification en fournissant au moins un certificat de manière que la passerelle de sécurité (120/125) et l'équipement utilisateur (105) aient au moins un certificat concordant ; le procédé étant **caractérisé par** les étapes suivantes :
- (410) le fait que l'équipement utilisateur (105) fournit à la passerelle de sécurité (120/125) une indication de son certificat ou ses certificats racine disponibles ;
- (415) le fait que la passerelle de sécurité (120/125) compare l'indication du certificat ou des certificats racine disponibles provenant de l'équipement utilisateur (105) avec des certificats stockés ;
- (420) si la passerelle de sécurité (120/125) ne peut pas trouver un certificat stocké concordant avec le certificat ou les certificats racine indiqués, le fait que la passerelle de sécurité (120/125) demande un certificat concordant auprès du serveur de certificats (140) ;
- (422) le fait que le serveur de certificats (140) génère un certificat concordant et une paire de clés associée ;
- (425) le fait que le serveur de certificats (140) envoie le certificat concordant et sa paire de clés associée à la passerelle de sécurité (120/125) ;
- (427) le fait que la passerelle de sécurité (120/125) envoie le certificat concordant à l'équipement utilisateur (105) ; et
- (428) le fait que l'équipement utilisateur (105) valide le certificat reçu.

2. Procédé selon la revendication 1, dans lequel le serveur de certificats est un serveur AAA dans le réseau de rattachement de l'équipement utilisateur (105).

3. Procédé selon la revendication 1, dans lequel le certificat de la passerelle de sécurité (120/125) est envoyé au serveur de certificats (140) durant une procédure d'authentification EAP et dans lequel le certificat est compris dans un attribut de message.

4. Procédé selon la revendication 1, dans lequel une indication du résultat de la validation est envoyée à l'équipement utilisateur durant une procédure d'authentification EAP et dans lequel l'indication est comprise dans un attribut de message.

5. Passerelle de sécurité (120/125) adaptée pour être en communication avec un équipement utilisateur (105) et un serveur de certificats (140) dans un réseau de communication, la passerelle de sécurité (120/125) comprenant un module de communication (835) et un module de manipulation de certificats (840) en connexion avec un module de stockage de certificats (845), le module de manipulation de certificats (840) étant adapté pour, dans une procédure d'authentification avec l'équipement utilisateur (105), échanger des informations sur des certificats disponibles avec l'équipement utilisateur et pour être muni d'au moins un certificat de manière que la passerelle de sécurité et l'équipement utilisateur aient au moins un certificat concordant, **caractérisée en ce que** le module de manipulation de certificat est adapté en outre pour être muni d'une indication du certificat ou des certificats racine disponibles dans l'équipement utilisateur et pour comparer ladite indication fournie du certificat ou des certificats racine avec au moins un certificat stocké précédemment, et, si aucun un certificat concordant n'est identifié, engager le serveur de certificats (140) dans la procédure d'authentification, et **en ce que** le module de manipulation de certificats (840) est adapté pour demander au serveur de certificats (140) de fournir un certificat concordant, recevoir du serveur de certificats le certificat concordant et une paire de clés associée du serveur de certificats, envoyer le certificat concordant au certificat utilisateur et l'utiliser dans la procédure d'authentification avec l'équipement utilisateur (105).
